**Europäisches Patentamt**

**European Patent Office**

**Office européen des brevets**

(19)

(11) Veröffentlichungsnummer : **0 403 859 B1**

(12) **EUROPÄISCHE PATENTSCHRIFT**

(45) Veröffentlichungstag der Patentschrift :
**22.04.92 Patentblatt 92/17**

(51) Int. Cl.$^5$ : **A01M 7/00**

(21) Anmeldenummer : **90110428.1**

(22) Anmeldetag : **01.06.90**

(54) **Geschlossenes landwirtschaftliches Feldspritzensystem.**

(30) Priorität : **23.06.89 DE 3920577**

(43) Veröffentlichungstag der Anmeldung :
**27.12.90 Patentblatt 90/52**

(45) Bekanntmachung des Hinweises auf die
Patenterteilung :
**22.04.92 Patentblatt 92/17**

(84) Benannte Vertragsstaaten :
**DE FR GB NL**

(56) Entgegenhaltungen :
**DE-A- 3 540 198
FR-A- 2 565 000
FR-A- 2 572 253
GB-A- 1 375 362
Prospekt "This is the Lely Front Tank Unit",
Druckvermerk "440/ETP/6/82"**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Wiemeyer, Benno
Im Sande 6
W-4531 Lotte-Halen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein geschlossenes landwirtschaftliches Feldspritzensystem gemäß des Oberbegriffes des Patentanspruches 1.

Derartige geschlossene landwirtschalftliche Fledspritzensysteme sind bereits in der Praxis bekannt (vgl. Prospekt "This is the Lely Front Tank Unit" mit Druckvermerk "440/ETP/6/82"). Bei diesen Feldspritzensystem ist an den Dreipunktkraftheber auf der Rückseite des Schleppers eine landwirtschaftliche Fleldspritze mit Flüssigkeitstank, Pumpe, Dosierelement und Verteilergestänge angeordnet. Diese Feldspritze weist einen Flüssigkeitstank auf. Die Größe des Flüssigkeitstanks ist begrenzt aufgrund der Tragkraft des Schlepper-Dreipunkt-Krafthebers sowie dem Gewicht des Schleppers. Um hier Abhilfe zu schaffen hat man an der Frontseite des Schleppers einen zusätzlichen Flüssigkeitstank angeordnet. Hierdurch ist es möglich, wesentlich mehr Spritzflüssigkeit mitzuführen. Diesem Flüssigkeitstank ist eine Pumpe zugeordnet, die an dem Rahmen des auf der Frontseite angeordneten Flüssigkeitstanks angeordnet ist. Diese Pumpe, die die Flüssigkeit aus dem Fronttank in den Hecktank pumpt, wird von einem Hydraulikmotor angetrieben. Um eine ausreichende Hydraulikleistung zu haben, ist es erforderlich, daß zusätzlich zu der Schlepperhydraulik eine eigene Hydraulikpumpe vorgesehen sein muß. Hierdurch ist dieses System relativ kostenaufwendig.

Der Erfindung liegt nun die Aufgabe zugrunde, auf einfachste Weise einen kostengüngstigen Antrieb für die die Flüssigkeit aus dem auf der Frontseite angeordneten Tank fördernde Pumpe zu schaffen.

Diese Aufgabe wird in erfindungsgemäßerweise durch die Maßnahme gemäß des Kennzeichens des Patentanspruches 1 gelöst. Infolge dieser Maßnahmen wird die Voraussetzung für einen äußerst kostengünstigen Antrieb der dem frontseitigen Tank zugeordneten Pumpe geschaffen. Hierdurch ist es möglich, daß die die Flüssigkeit aus dem Fronttank fördernde Pumpe von dem gleichen Antrieb wie die dem Hecktank zugeordneten Pumpe angetrieben wird. Es wird auf einfachste Weise ein gemeinsamer Antrieb der beiden Pumpen erreicht.

Damit auf einfachste Weise, wenn das Feldspritzensystem, ohne das Flüssigkeit aus dem Fronttank gefördert werden muß, eingesetzt werden kann, ohne daß die zweite Pumpe mit angetrieben werden muß, ist erfindungsgemäß vorgesehen, daß die aus dem Fronttank die Flüssigkeit fördernde Pumpe hinter der dem Hecktank zugeordneten Pumpe angeordnet ist, und daß die hintere Pumpe in Längsrichtung verschiebbar auf dem Rahmen angeordnet ist. Hierdurch ist es möglich, die hinter Pumpe von dem Antrieb abzukoppeln, indem die Pumpe einfach nach hinten verschoben wird.

Weitere Einzelheiten der Erfindung sind der Beispielsbeschreibung und den Zeichnungen zu entnehmen. Hierbei zeigen

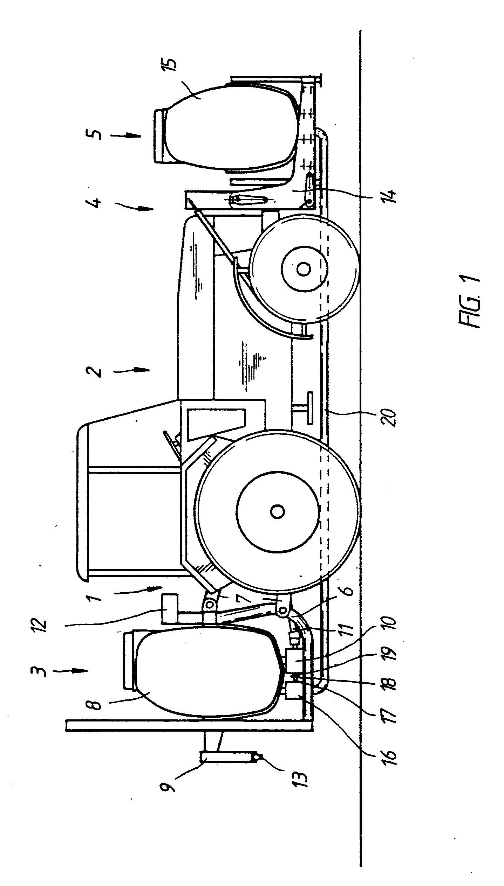

Fig. 1 das geschlossene landwirtschaftliche Feldspritzensystem, besteht aus der an dem Drei-Punkt-Kraftheber eines Schleppers angeordneten Feldspristze sowie einem an der Frontseite des Schleppers angeordneten Fronttanks in der Seitenansicht und in Prinzipdarstellung und

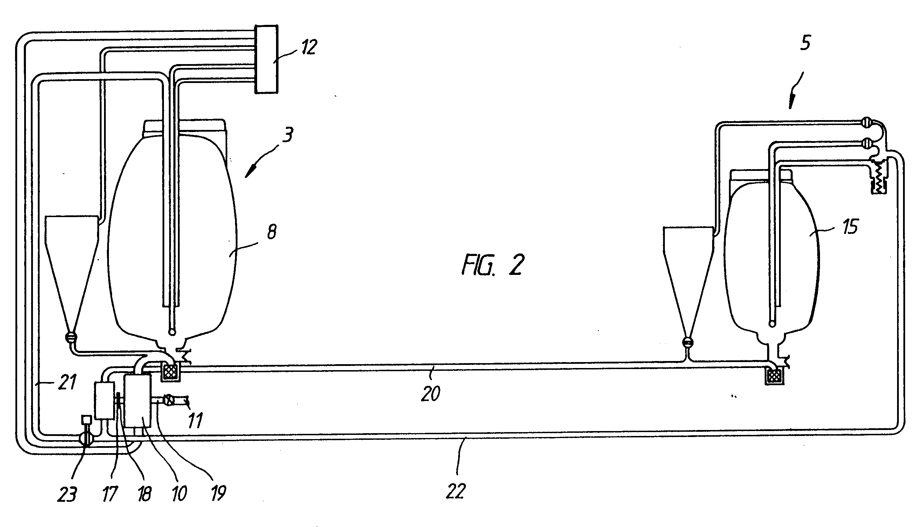

Fig. 2 das Funktionsschema des erfindungsgemäßen Feldspritzensystems.

Das geschlossene landwirtschaftliche Feldspritzensystem besteht aus dem an der Heckseite 1 eines Schleppers 2 angeordneten Feldspritze 3 und dem auf der Frontseite 4 des Schleppers 2 angeordneten Fronttank 5. Die Feldspritze 3 weist den Rahmen 6 auf, über den die Feldspritze 3 an den heckseitigen Drei-Punkt-Kraftheber 7 des Ackerschleppers 2 angebaut ist. Auf dem Rahmen 6 ist der Flüssigkeitstank 8 angeordnet. Desweiteren ist an den Rahmen 6 der Feldspritze 3 das Verteilergestänge 9 befestigt. Unterhalb des Flüssigkeitstanks 8 ist auf dem Rahmen 6 die Pumpe 10 befestigt, welche über eine Gelenkwelle 11 von der Schlepperzapfwelle angetrieben wird. Über die Pumpe 10 wird die Flüssigkeit aus dem Flüssigkeitstank 8 angesaugt und über die Dosierelemente 12 in bekannter und daher nicht näher dargestellter Weise den Verteilerdüsen 13 des Verteilergestänges 9 zugeführt.

Um eine ausreichend große Flüssigkeitmenge auch von kleineren Schleppern mitführen zu können, ist auf der Frontseite 4 des Ackerschleppers 2 der Fronttank 5 über den Kuppelrahmen 14 angekuppelt. Der Fronttank 5 weist den Flüssigkeitsbehälter 15 auf. Unter dem auf der Heckseite 1 des Ackerschleppers 2 angeordneten Flüssigkeitstank 8 ist eine weitere Pumpe 16 angeordnet. Die Antriebswelle 17 der Pumpe 16 ist über das Kupplungsstück 18 drehfest mit der Welle 19 der Pumpe 10 gekuppelt, so daß die Pumpe 16 über die Pumpe 10 und der Gelenkwelle 11 von der Schlepperzapfwelle angetrieben wird. Die Pumpe 16 saugt über die Saugleitung 20 die sich im Flüssigkeitsbehälter 15 des Fronttanks 5 befindliche Flüssigkeit ab, so daß die Flüssigkeit aus dem Flüssigkeitsbehälter 15 des Fronttanks 5 von der Pumpe 16 über die Leitung 21 in den Flüssigkeitstank 8 der heckseitigen Feldspritze gefördert wird.

Desweiteren kann zwischen der Pumpe 16 und dem Flüssigkeitsbehälter 15 des Fronttanks 5 eine Rückführleitung 22 vorgesehen sein, so daß die sich in den Flüssigkeitsbehälter 15 befindliche Flüssigkeit aufgerührt werden kann. Hierbei ist dann in entsprechender Weise in den Leitungen ein Drei-Wege-Hahn 23 anzuordnen, so daß wahlweise die Flüssigkeit in dem Flüssigkeitstank 15 von der Pumpe 16 aufgerührt oder bei Umstellung des Drei-Wege-Hahn 23 in den Flüssigkeitstank 8 der heckseitigen Feldspritze 3 gefördert wird.

Die Pumpe 16 ist in Längsrichtung verschiebbar auf dem Rahmen 6 angeordnet, so daß durch Verschieben der Pumpe 16 die Pumpe 16 von der Pumpe 10 abgekoppelt oder an diese angekoppelt werden kann.

## Patentansprüche

1. Geschlossenes landwirtschaftliches Feldspritzensytem, bestehend aus einer an der Heckseite (1) eines Schleppers (2) ankuppelbaren Feldspritze (3) mit Flüssigkeitstank (8), einer ersten auf einem Rahmen (6) angeordneten Pumpe (10), Dosierelemente und Verteilergestänge (9) und einem an der Frontseite des Schleppers (2) ankuppelbaren zusätlichen Flüssigkeitstank (5) mit einer zweiten Pumpe (16), über welche die Flüssigkeit aus dem an der Frontseite des Schleppers (2) angekuppelten Tank (5) in dem an der Heckseite des Schleppers angekuppelten Tank (8) zu pumpen ist, dadurch gekennzeichnet, daß die die Flüssigkeit aus dem frontseitigen (15) in den heckseitigen Tank (8) fördernde zweite Pumpe (16) ebenfalls an dem Rahmen (6) der auf der Heckseite (1) des Schleppers (2) angekuppelten Feldspritze (3) angeordnet ist, daß die beiden Pumpen (10,16) mit ihren Antriebswellen (17,19) fluchtend hintereinander angeordnet sind, und daß die beiden Antriebswellen (17,19) über ein Kupplungsstück (18) drehfest miteinander gekuppelt sind.

2. Feldspritzensystem nach Anspruch 1, dadurch gekennzeichnet, daß die aus dem Fronttank (5) die Flüssigkeit fördernde Pumpe (16) hinter der dem Hecktank (3) zugeordneten Pumpe (10) angeordnet ist, daß die hintere Pumpe (16) in Längsrichtung verschiebbar auf dem Rahmen (6) angeordnet ist.

## Revendications

1. Système de pulvérisateur agricole en circuit fermé composé d'un pulvérisateur agricole (3) monté à l'arrière (1) d'un tracteur (2), ce pulvérisateur comportant un réservoir à liquide (8), une première pompe (10) montée sur un châssis (6), des éléments de dosage et une barre de distribution (9) ainsi que d'un réservoir à liquide (5), supplémentaire, susceptible d'être fixé à l'avant du tracteur (2) et d'une seconde pompe (16) qui prend le liquide du réservoir (5) à l'avant du tracteur (2) pour le pomper dans le réservoir (8) fixé à l'arrière du tracteur, système caractérisé en ce que la seconde pompe (16) qui transfère le liquide à partir du réservoir frontal (5) dans le réservoir arrière (8) est également portée par le châssis (6) du pulvérisateur agricole (3) prévu à l'arrière (1) du tracteur (2) pour que les deux pompes (10, 16) soient alignées l'une derrière l'autre par leurs arbres d'entraînement (17, 19) et que les deux arbres d'entraînement (17, 19) soient reliés l'un à l'autre solidairement en rotation par une pièce d'accouplement (18).

2. Système de pulvérisateur agricole selon la revendication 1, caractérisé en ce que la pompe (16) qui transfère le liquide du réservoir frontal (5) est prévue derrière la pompe (10) associée au réservoir arrière (8) et en ce que la pompe arrière (16) peut coulisser longitudinalement sur le châssis (6).

## Claims

1. Integrated agricultural field spraying system, including a field sprayer (3), which is connectable to the rear end (1) of a tractor (2) and is provided with a container (8) for liquids, a first pump (10) which is disposed on a frame (6), metering members and distributor tube assemblies (9), and an additional container (5) for liquids, which is connectable to the front end of the tractor (2) and is provided with a second pump (16), via which the liquid can be pumped from the container (5) connected to the front end of the tractor (2) into the container (8) connected to the rear end of the tractor, characterised in that the second pump (16), which conveys the liquid from the front container (15) into the rear container (8), is also disposed on the frame (6) of the field sprayer (3), which is connected to the rear end (1) of the tractor (2), in that the two pumps (10, 16) are disposed one behind the other so that their drive shafts (17, 19) are in alignment with each other, and in that the two drive shafts (17, 19) are interconnected in a non-rotatable manner via a coupling (18).

2. Field spraying system according to claim 1, characterised in that the pump (16), which conveys the liquid from the front container (5), is disposed behind the pump (10) associated with the rear container (3), and in that the rear pump (16) is disposed on the frame (6) so as to be displaceable in a longitudinal direction.

FIG. 1

FIG. 2